Europäisches Patentamt

European Patent Office

Office européen des brevets

(11) Publication number: **0 080 709**
**B1**

# EUROPEAN PATENT SPECIFICATION

(45) Date of publication of patent specification: **05.03.86**

(51) Int. Cl.⁴: **C 03 B 18/08**

(21) Application number: **82110930.3**

(22) Date of filing: **26.11.82**

(54) Pressure sizing of float glass.

(30) Priority: **02.12.81 US 326890**
**04.01.82 US 336756**

(43) Date of publication of application:
**08.06.83 Bulletin 83/23**

(45) Publication of the grant of the patent:
**05.03.86 Bulletin 86/10**

(84) Designated Contracting States:
**BE DE FR GB IT NL SE**

(56) References cited:
**FR-A-1 359 991**
**GB-A-1 152 718**

(73) Proprietor: **PPG INDUSTRIES, INC.**
**One PPG Place**
**Pittsburgh Pennsylvania 15272 (US)**

(72) Inventor: **Gulotta, Joseph A.**
**224 Fernledge Drive**
**New Kensington, Pa. 15068 (US)**
Inventor: **Kunkle, Gerald Erasmus**
**227 Argonne Drive**
**New Kensington, Pa. 15068 (US)**
Inventor: **Sensi, John Eugene**
**1910 Leishman Avenue**
**Arnold, Pa. 15068 (US)**

(74) Representative: **Sternagel, Hans-Günther, Dr.**
**et al**
**Patentanwälte Dr. M. Hann Dr. H.-G. Sternagel**
**Marburger Strasse 38**
**D-6300 Giessen (DE)**

Courier Press, Leamington Spa, England.

## Description

Background of the Invention

This invention relates to the manufacture of flat glass wherein the glass is formed into a flat sheet while supported on a pool of molten metal, commonly referred to as the float process. More particularly, this invention relates to a process for sizing the glass by means of pressure while supported on the molten metal so as to minimize distortion in the product glass, and to an apparatus for carrying out said process.

In a float forming process molten glass is delivered onto a pool of molten metal, usually tin or an alloy thereof, and thereafter formed into a continuous ribbon or sheet of glass. Under the competing forces of gravity and surface tension, the molten glass on the molten metal spreads outwardly to an equilibrium thickness of about 6.6 millimeters. In order to produce glass of thicknesses less than the equilibrium thickness the prior art has resorted to various arrangements for stretching the glass ribbon while still in a viscous state on the molten metal. These arrangements usually involve engaging marginal edge portions of the ribbon with mechanical devices, usually toothed rolls. The contact between the glass ribbon and these mechanical devices is believed to create disturbances in the ribbon as well as the molten metal pool which cause optical distortion to be imparted to the glass. It would be highly desirable to eliminate the disturbances caused by attenuating devices and to thereby improve the optical quality of the glass produced.

The use of super-atmospheric gas pressure for attenuating glass has been suggested in the prior art, for example, in U.S. Patent Nos. 3,241,937 (Michalik et al.); 3,241,938 (Michalik); 3,241,939 (Michalik); 3,248,197 (Michalik et al.); 3,345,149 (Michalik et al.); 3,615,315 (Michalik et al.); 3,749,563 (Stingelin); 3,883,338 (Stingelin); 3,885,944 (Stingelin); 3,432,283 (Galey). In each of these prior art arrangements a higher pressure is maintained over central portions of the glass ribbon than along marginal regions of the ribbon. This entails use of plenum pressurized with gas overlying the ribbon of the glass and having edges closely spaced above the glass ribbon defining a peripheral slot through which the pressurized gas escapes. Because of the large volume of gas escaping, such arrangements have been less practical than would be desired for widespread commercial application. In one of the above mentioned patents, No. 3,432,283, there is shown an auxiliary pressure sizing chamber for speeding the spreading of the initially deposited mass of molten glass. However, since the mass of glass is initially very thick, a subsequent pressure sizing chamber is required in order to obtain the desired less than equilibrium thickness in the glass sheet. Instead of enlarging the pressure sizing chamber as in that patent, it would be desirable to size the glass in as short a length as possible in order to minimize the size of the molten metal bath and to minimize the volume of pressurized gas that must be supplied for the sizing process. Because the atmosphere in the forming chamber is non-oxidizing gas in order to avoid oxidation of the molten metal, minimizing the volume used is an important cost factor. Furthermore, pressure sizing the glass from a relatively thick initial deposit on the molten metal as in the prior art requires pressures within the pressure sizing chamber greater than would be desired. High pressures within the pressure sizing chamber lead to high velocity escape of gases through the peripheral openings between the pressure chamber walls and the glass in the prior art arrangements which, in turn, leads to detrimentally high gas usage. Unduly large volumes of gas throughput can also leads to excessive cooling of the forming chamber unless considerable amounts of energy are employed to preheat the gas.

U.S. Patent No. 3,841,857 discloses a method for attenuating glass by blasts of gas on both sides of a glass ribbon. Such an approach, however, foregoes the benefits of a molten metal float bath for providing surface smoothness.

It is the technological problem of the invention to create a method of producing float glass of less than equilibrium thickness and an apparatus for producing said glass which avoids the disadvantages mentioned before. Said technological problem is, according to the invention, solvent by a method of producing float glass of less than equilibrium thickness wherein a stream of molten glass is delivered onto a molten metal pool and pressure greater than atmospheric is imposed on the glass in a pressurized chamber so as to reduce the glass thickness to a thickness less than the equilibrium thickness as it floats on the molten metal and is cooled to a dimensionally stable condition as the glass is withdrawn from the pressurized chamber, which is characterized by restraining the glass against lateral shrinkage until the glass has cooled to the dimensionally stable condition and causing the molten glass to contact side walls of the pressurized chamber throughout the time that pressure greater than atmospheric is imposed on the glass and an apparatus for producing float glass of less than equilibrium thickness comprising a forming chamber (13) adapted to hold a pool of molten metal (16), the forming chamber (13) including a pressure chamber (25) and means (37) to impose a pressure in said chamber (25) and a cooling chamber (41) separated from another by a vertically extending seal wall (35) above the elevation of the molten metal (16), an entrance opening between a source of molten glass (10) and the pressure chamber (25) adapted to admit molten glass (11) into the pressure chamber (25), and an exit opening (52) in the cooling chamber (41) through which the glass ribbon may be withdrawn from the pool of molten metal (16) which is characterized in that at least a portion of the cooling chamber (41) has a width greater than the maximum width of the pressure chamber (25), the entrance opening has a width substantially as great as the width of the pressure chamber (25) and the pressure in the pressure chamber (25) is greater than in the cooling chamber (41), means (40) in the cooling chamber (41) for engaging edge portions of a glass ribbon emerging from the pressure chamber (25) and for restricting lateral shrinkage of the glass ribbon are provided. Preferred embodiments of the invention are described in the subclaims.

The invention results in a particularly compact and economical system for producing thin, high quality float glass.

In the present invention, a ribbon of molten glass is initially deposited onto a molten metal bath. The initial zone of the float bath is maintained under super-atmospheric pressure and the glass contacts the side walls of the pressurized float chamber throughout its length. The glass ribbon attains below equilibrium thickness in the pressurized chamber due to the super-atmospheric pressure, and the glass separates from the side walls as it exits the pressurized chamber. Downstream from the pressurized chamber the sized glass ribbon is restrained against lateral shrinking until it has cooled to a dimensionally stable condition. Preferably the molten glass is delivered into the molten metal bath at a width substantially the same as the width of the glass being withdrawn from the pressurized chamber.

Compared to conventional mechanical attenuating devices, the pressure sizing technique of the present invention introduces less distortion-causing perturbation in the molten glass/molten metal system. By maintaining the glass in contact with the side walls of the pressure sizing chamber, escape of gas along the sides of the glass ribbon is eliminated, thereby conserving on gas usage and expediting attainment of pressures within the chamber. Additionally, since the invention involves in a preferred embodiment delivering the glass onto the molten metal at substantially full width, less sizing need take place within the pressure chamber, and therefore a pressure chamber of reduced size may be employed. The use of a smaller pressure chamber and the use of less gas result in significant economic advantages.

A preferred mode of carrying out the pressure sizing method of the present invention entails delivery of molten glass to the pressure sizing chamber at temperatures higher than those customarily employed in float processes, i.e., at least (2100°F.) 1150°C. and preferably at least (2300°F.) 1260°C. At the low glass viscosities accompanying such high temperatures the superatmospheric pressure in the pressure chamber has a rapid effect on the glass thickness so that thickness reduction can be achieved in a short period of time and, accordingly, the length of the pressure chamber may be relatively short. The low viscosity also permits any perturbations introduced by delivering the molten glass onto the molten metal to flow out rapidly. These temperatures are higher than those at which conventional edge gripping attenuating devices are effective.

In a conventional glassmaking operation, a chamber known as a refiner or conditioner is interposed between the melting furnace and the forming chamber, the function of at least a substantial portion being to permit the glass to cool from a melting temperature to a temperature suitable for forming. But when the glass is formed at higher than conventional temperatures as is permitted by the present invention, the cooling function of the refiner/conditioner is reduced and, thus, it may be reduced in size, thereby effecting further economies.

Unlike conventional attenuating methods where the glass ribbon must be maintained at a suitable temperature for attenuation along a considerable length of the forming chamber, the glass ribbon in the present invention exits the pressure chamber substantially completely attenuated, and then may be cooled as rapidly as possible to render it dimensionally stable. Accordingly, the overall forming chamber length may advantageously be considerably less than that of a conventional float forming process.

Another aspect of sizing the glass at relatively high temperatures is that the sized glass may leave the pressure chamber at temperatures comparable to those at which glass enters conventional float forming processes, e.g. (1900°F.) 1040°C. to (2100°F.) 1150°C. Such high temperatures and the accompanying low glass viscosities following attenuating permit surface distortions that may have been produced by the attenuating process to flow out.

In a conventional float forming operation molten glass is metered into the forming chamber through a slit defined by a movable tweel above and a threshold or lip on the underside. Such a threshold is employed merely for containment of the molten metal of the forming chamber, and metering of the molten glass is carried out by means of a tweel that overlies a portion of the molten metal bath. This metering of molten glass is particularly significant in combination with the feature of high temperature forming since at such high temperatures the dynamic erosion of the glass on a refractory slot would be severe.

In a preferred embodiment of the present invention, a layer of molten glass floating on a pool of molten metal is first partially thinned by super-atmospheric pressure sizing, and then reduction to the final thickness is completed by lateral stretching. Because the glass is only partially thinned by pressure, the pressure sizing requirements are lessened, and therefore the pressure chamber may be economically compact and the atmosphere pressure and volume requirements reduced. The low level of perturbations to the fluid glass and molten metal in the pressure sizing zone yields a ribbon having relatively low surface distortion. The distortion quality of the glass is not deteriorated, and may be improved, by the subsequent mechanical attenuation since it is limited to stretching in substantially the lateral direction only (transverse to the direction of glass travel). Major sources of transmitted light distortion in float glass are thickness variations and corrugations that extend in the longitudinal direction. It is believed that lateral stretching diminishes the observability of these defects by reducing their spatial frequency across the width of the glass ribbon.

The Drawings

FIG. 1 is a schematic plan view with the top cut away of an embodiment of the float glass forming operation of the present invention.

FIG. 2 is a longitudinal cross-section of the float glass forming operation of FIG. 1 taken along line 2—2 in FIG. 1.

FIG. 3 is a schematic representation of a variation of FIG. 1 in accordance with a subsidiary feature of the invention, wherein pressure sizing is followed by lateral stretching.

Detailed Description

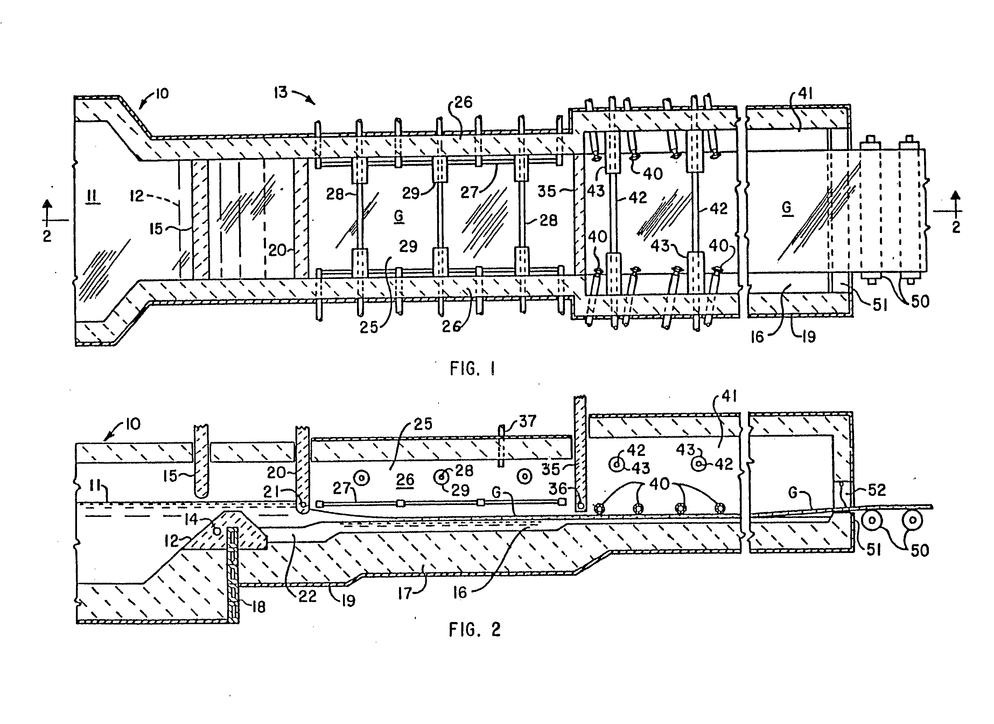

A detailed description of the invention will be made with reference to a specific preferred embodiment as shown in FIGS. 1 and 2. It should be understood that the invention may take various other specific forms.

In FIGS. 1 and 2 a refiner or conditioner 10 contains a body of molten glass 11. A threshold member 12 separates the conditioner or refiner 10 from the forming chamber designated generally as 13. The threshold may include a conduit 14 for the passage of cooling medium. As is the conventional practice, a cut-off tweel 15 may be provided for shutting off the flow of molten glass from the conditioner into the forming chamber. In the forming chamber a bath or pool of molten metal 16 is contained within a refractory basin 17. The molten metal is tin or an alloy thereof such as tin/copper alloys. Coolers 18 aid containment of the molten metal at the hot end of the forming chamber. Oxidation of the molten metal is retarded by providing a non-oxidizing atmosphere (e.g., nitrogen or forming gas) within the forming chamber. Maintenance of the non-oxidizing atmosphere within the forming chamber is assisted by a gas tight casing 19 around the forming chamber.

In the preferred embodiment, as shown in FIG. 2, molten glass from the conditioner 10 is metered into the forming chamber 13 by a metering tweel 20 which may be provided with a conduit 21 in its lower portion for circulating coolant in order to extend its life. The tweel 20 overlies a deep portion 22 of the molten metal in the basin 17, and the distance between the lower edge of the tweel and the underlying molten metal may be adjusted by vertical movement of the tweel so as to establish a predetermined flow rate of molten glass into the forming chamber. The molten glass is delivered to the full width of the first zone of the forming chamber, which is a pressure chamber 25 in which the glass G is maintained in contact with the side walls 26. Maintaining glass contact with the side walls may be assisted by employing wettable materials for the side walls (most ceramic refractory materials) and by avoiding use of non-wettable materials, such as graphite. Fluidity of the glass along the sides may be assisted by edge heating means such as the bar type electrical resistance heaters 27 shown in the drawings. Coolers may be provided in the pressure forming chamber to begin cooling the glass, and preferably the cooling is directed toward center portions of the glass ribbon. In the arrangement shown, the coolers are comprised of conduits 28 for carrying water or other heat transfer medium provided with sleeves 29 of insulating material at each end.

The downstream end of the pressure sizing chamber 25 is closed by a vertically adjustable exit seal 35. The bottom edge of the exit seal 35 is spaced a small distance (e.g., a few millimeters) above the top surface of the glass ribbon to minimize leakage of the pressurized atmosphere from the pressure sizing chamber. In order to extend the life of the exit seal and to cool the glass leaving the pressure chamber, the exit seal 35 may be provided with a conduit 36 for passage of a cooling medium. Except for the gap under the exit seal, the pressure sizing chamber 25 is essentially gas tight, thereby permitting imposition of pressures greater than atmospheric. Pressurized gas may be introduced to the pressure sizing chamber through a conduit 37. As in conventional float forming operations, the atmosphere in the pressure chamber 25 as well as the remainder of the forming chamber is preferably a non-oxidizing atmosphere such as nitrogen or forming gas.

Molten glass spreads on molten metal until it attains an equilibrium thickness in accordance with the following relationship:

$$H_1{}^2 = \frac{2p_t(S_1 + S_2 - S_3)}{p_g g(p_t - p_g)}$$

where

$h_1$ = equilibrium glass thickness

$p_t$ = density of molten metal

$p_g$ = density of molten glass

$S_1$ = atmosphere – glass surface tension (dynes/cm)

$S_2$ = glass-metal surface tension

$S_3$ = atmosphere-metal surface tension

$g$ = acceleration of gravity.

For conventional soda/lime/silica flat glass on molten tin, the equilibrium thickness is about (0.27 inches) 6.8 millimeters. Increasing the pressure on the glass has the apparent effect of increasing the density of the glass. Therefore, in accordance with the equation above, an increase in the apparent density of the glass results in a small equilibrium glass thickness. The reduced glass thickness may be calculated as follows:

$$h_2 = h_1 - \frac{P_2 - P_1}{p_g g}$$

where

$h_1$ = equilibrium glass thickness
$h_2$ = reduced glass thickness
$P_1$ = atmospheric pressure
$P_2$ = pressure in pressure sizing chamber
$p_g$ = density of glass
g = acceleration of gravity

It may be noted that the atmospheric pressure $P_1$ in the equation above is actually the pressure on the exposed molten metal within the forming chamber outside the pressure sizing zone and may be slightly above the natural atmospheric pressure outside the forming chamber. Within the pressure sizing chamber no portion of the molten metal is exposed to the pressurized atmosphere. Small pressure differences yield significant reductions in glass thickness as may be seen in the following table of examples:

| $P_2 - P_1$ (mbar) | Glass Thickness |
|---|---|
| 0.177 | 6.3 |
| 0.245 | 5.8 |
| 0.373 | 5.3 |
| 0.500 | 4.8 |
| 0.628 | 4.3 |
| 0.746 | 3.8 |
| 0.873 | 3.3 |
| 1.001 | 2.8 |
| 1.118 | 2.3 |
| 1.246 | 1.8 |
| 1.373 | 1.3 |
| 1.481 | 0.8 |
| 1.619 | 0.3 |

Pressure sizing is carried out economically in the present invention in part due to the fact that molten glass is metered into the pressure forming chamber at substantially full width. By "substantially full width" is meant that the width of the glass stream within the pressure sizing chamber is at least 90% of the final width of the formed glass ribbon being withdrawn from the forming chamber. Because the glass has been spread to substantially its full width by the metering function, the residence time of the glass within the pressure sizing chamber may be devoted entirely to thinning the glass ribbon. Accordingly, the pressure sizing chamber may be relatively compact.

In prefered embodiments of the invention, the economy and compactness of the pressure sizing chamber are further enhanced by delivering the molten glass into the pressure sizing chamber at temperatures considerably higher than those conventionally employed for float forming. In conventional float processes, the molten glass is delivered onto the molten metal typically at about (2000°F.) 1090°C., but in the preferred embodiments of the present invention the delivery temperature is in excess of (2100°F.) 1150°C. and most preferably above (2300°F.) 1260°C. Even higher temperatures could be employed to advantage, but temperatures may be limited by the durability of conventional refractory materials. Higher temperatures do not affect the final glass thickness, but the reduced viscosities which accompany high temperatures permit the glass to attain the final thickness in a shorter period of time. Therefore, less residence time is required in the pressure sizing chamber and the pressure sizing chamber may be of reduced length. These temperatures refer to conventional soda/lime/silica flat glass and will differ for other glass compositions. The use of unusually high temperatures for sizing is made possible by the fact that pressure sizing does not require mechanical engagement of the glass ribbon.

As the ribbon of glass G is drawn out of the pressure chamber 25 it enters a cooling zone 41 in which a pressure lower than that of the pressure chamber is maintained. The glass separates from the sidewalls as it enters zone 41. In the reduced pressure environment, the ribbon has a tendency to shrink in width and increase in thickness as long as the temperature of the glass remains sufficiently high for the glass to be in a plastic state. Therefore, it is necessary to maintain the ribbon width by forces applied to the edges, such as by edge roll means 40, until the glass has cooled to a substantially stable condition. When the glass passes from the pressure sizing chamber, it should be at a temperature suitable for engagement by the edge retaining devices, typically below about (1900°F.) 1040°C. Thus, the glass may be permitted to cool considerably as it passes through the pressure sizing chamber and as it passes into the downstream zone 41 it may be further cooled as rapidly as practical since attenuation is complete at that point. The accelerated cooling may be aided by coolers 42 which may optionally be provided with insulating sleeves 43 adjacent to the side walls of the chamber 41. In comparison with conventional float attenuating techniques where the glass ribbon must be maintained at temperatures suitable for attenuation, e.g., above about (1500°F.) 815°C., along a considerable length of the float chamber, the ability to rapidly cool the glass ribbon emerging from the pressure chamber in the present invention results in an advantageously short forming chamber.

At the exit end of the forming chamber, conventional means such as lift-out rolls 50 may be provided for lifting the dimensionally stable ribbon of glass G from the molten metal over a lip 51 at an exit opening 52.

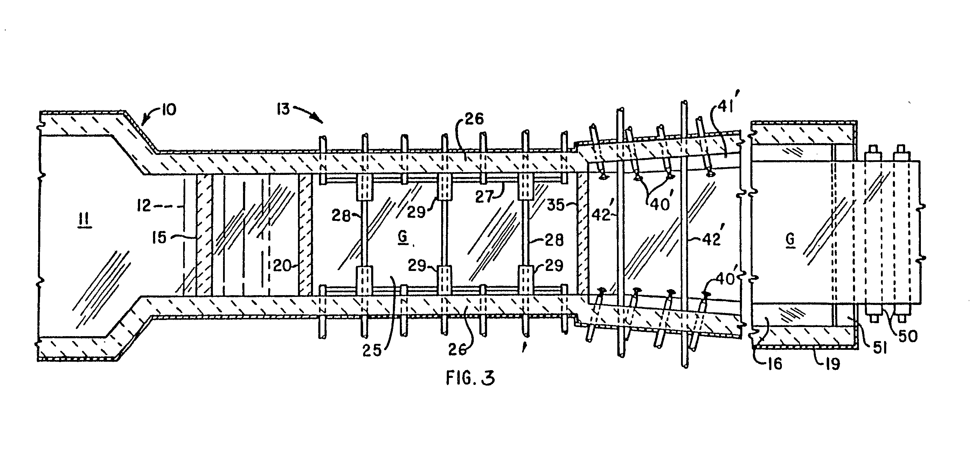

In the FIG. 3 embodiment, the forming apparatus is substantially the same as the FIG. 1 embodiment described above, and like numerals identify like elements, with the exception that the sides of the downstream chamber 41' may taper outwardly to accommodate lateral stretching of the ribbon. In this aspect of the invention, the ribbon width is not only maintained but enlarged by the rolls 40'. The rolls are angled outwardly to impart a lateral component of force to the ribbon. Preferably, no substantial longitudinal acceleration is imparted to the ribbon at that point to avoid longitudinal stretching.

Predominant sources of optical distortion in flat glass are longitudinally extending surface irregularities. Scanning transversely across the ribbon with optical measuring devices reveals that the optical power of this distortion is strongly dependant on the spatial frequencies of the surface irregularities in accordance with the following relationship:

$$P = khf^2$$

where P is optical power, k is a constant, h is the height of amplitude of the surface defect, and f is the spatial frequency of the distortion pattern. Widening the ribbon has been found to decrease the frequency of longitudinal surface defects present in the ribbon, which in turn has a beneficial second power effect on the optical power of the distortion. The frequency alteration is proportional to the change in ribbon width as follows:

$$f_2 = f_1 \times W_1/W_2$$

where $f_1$ is the optical direction frequency entering the transverse attenuating zone, $f_2$ is the optical distortion frequency leaving the transverse attenuation zone, $W_1$ is the ribbon width entering the transverse attenuation zone, and $W_2$ is the ribbon width leaving the transverse attenuation zone. Because of the second power relationship, small changes in ribbon width can provide significant benefits to the optical quality of the glass. Accordingly, improvements may be obtained by widening the ribbon to a final width at least 1.05 times its width leaving the pressure chamber and preferably at least 1.1 times its width. When the glass passes from the pressure sizing chamber, it should be at a temperature suitable for engagement by the edge retaining devices, typically below about (1900°F.) 1040°C. Thus, the glass may be permitted to cool considerably as it passes through the pressure sizing chamber, and as it passes into the attenuating zone 41' it may be further cooled. The cooling may be aided by coolers 42' within zone 41'.

Subsequent to the lateral attenuation, the glass is permitted to cool, with or without the aid of coolers 42', to a temperature at which the ribbon is dimensionally stable and can be lifted from the molten metal pool (e.g., (1100°F.) 600°C.).

It is contemplated that one variation of the present invention may entail a pressure sizing chamber in which the side walls taper away from one another so that the glass may increase in width slightly as it is reduced in thickness. In such an embodiment, the widening of the ribbon in the pressure sizing chamber represents a minor portion of the overall attenuation and, thus, would not be considered to depart from the principle that the glass is metered into the pressure sizing chamber at substantially full width.

Other modifications as are known to those of skill in the art may be resorted to without departing from the scope of the claims which follow.

## Claims

1. A method of producing float glass of less than equilibrium thickness wherein a stream of molten glass is delivered onto a molten metal pool (16) and pressure greater than atmospheric is imposed on the glass in a pressurized chamber (25) so as to reduce the glass thickness to a thickness less than the equilibrium thickness as it floats on the molten metal and is cooled to a dimensionally stable condition as the glass is withdrawn from the pressurized chamber, characterized by restraining the glass against lateral shrinkage until the glass has cooled to the dimensionally stable condition and causing the molten glass to contact side walls (26) of the pressurized chamber throughout the time that pressure greater than atmospheric is imposed on the glass.

2. The method of claim 1 characterized by the molten glass being delivered onto the molten metal (16) at a width substantially the same as the width of the glass being withdrawn from the pressurized chamber (25).

3. The method of claim 1 or 2 characterized by the molten glass being delivered onto the molten metal at a temperature of at least 1150°C.

4. The method of claims 1 to 3 characterised by applying forces to edge portions of the glass in an attenuation zone (41) after being withdrawn from the pressurized zone (25) as to widen the glass ribbon.

5. The method of claim 4 characterized in that the width of the ribbon is increased in the attenuation zone (41) by a factor of at least 1.05.

6. The method of claim 4 characterized in that the width of the ribbon is increased in the attenuation zone (41) by a factor of at least 1.1.

7. The method of claims 5 or 6 characterized by imparting no substantial longitudinal attenuation to the ribbon after leaving the pressure zone (25).

8. The method of claims 1 to 7 characterized in that the molten glass enters the pressure chamber (25) at a temperature of at least 1260°C.

9. The method of claims 1 to 7 characterized in that the molten glass enters the pressure chamber (25) at a temperature of at least 1150°C.

10. The method of claims 1 to 9 characterized in that the attenuation of the glass is substantially completed before the glass temperature falls below 1040°C.

11. The method of claims 1 to 10 characterized in that the molten glass stream being passed into the pressure chamber (25) is supported by molten metal (22) before entering the pressure chamber.

12. The method of claim 11 characterized in that the stream of molten glass is delivered into the pressure chamber (25) through an opening defined by a horizontally elongated refractory member (20) on the upper side and a pool of molten metal (22) on the underside.

13. Apparatus for producing float glass of less than equilibrium thickness comprising a forming chamber (13) adapted to hold a pool of molten metal (16), the forming chamber (13) including a pressure chamber (25) and means (37) to impose a pressure in said chamber (25) and a cooling chamber (41) separated from another by a vertically extending seal wall (35) above the elevation of the molten metal (16), an entrance opening between a source of molten glass (10) and the pressure chamber (25) adapted to admit molten glass (11) into the pressure chamber (25), and an exit opening (52) in the cooling chamber (41) through which the glass ribbon may be withdrawn from the pool of molten metal (16) characterized in that at least a portion of the cooling chamber (41) has a width greater than the maximum width of the pressure chamber (25), the entrance opening has a width substantially as great as the width of the pressure chamber (25) and the pressure in the pressure chamber (25) is greater than in the cooling chamber (41), means (40) in the cooling chamber (41) for engaging edge portions of a glass ribbon emerging from the pressure chamber (25) and for restricting lateral shrinkage of the glass ribbon are provided.

**Patentansprüche**

1. Verfahren zum Herstellen von Flachglas unterhalb der Gleichgewichtsdicke, bei dem ein Strom von geschmolzenem Glas auf ein Bad aus geschmolzenem Metall (16) gefördert wird und Druck größer als Atmosphärendruck auf das Glas in einer Druckkammer (25) ausgeübt wird, um die Glasdicke auf eine Dicke unterhalb der Gleichgewichtsdicke zu reduzieren, während es auf dem geschmolzenen Metall schwimmt, und bei dem das Glas bis in den dimensionsstabilen Zustand abgekühlt ist, wenn es aus der Druckkammer abgezogen wird, gekennzeichnet durch Hindern des Glases am Querschrumpfen, bis das Glas in den dimensionsstabilen Zustand abgekühlt ist, und Herbeiführen einer Berührung des geschmolzenen Glases mit den Seitenwänden (26) der Druckkammer während der Zeit, in der ein Druck oberhalb Atmosphärendruck auf das Glas ausgeübt wird.

2. Verfahren nach Anspruch 1, dadurch gekennzeichnet, daß das geschmolzene Glas auf das geschmolzene Metall (16) in einer solchen Breite gefördert wird, die im wesentlichen mit der Breite des Glases übereinstimmt, mit der es aus der Druckkammer (25) abgezogen wird.

3. Verfahren nach Ansprüchen 1 oder 2, dadurch gekennzeichnet, daß das Glas mit einer Temperatur von mindestens 1.150°C auf das geschmolzene Metall gefördert wird.

4. Verfahren nach Ansprüchen 1 bis 3, gekennzeichnet durch Aufbringen von Kräften auf die Kantenteile des Glases in einer Ausziehzone (41), nachdem das Glas aus der Druckzone (25) abgezogen wurde, um das Glasband zu verbreitern.

5. Verfahren nach Anspruch 4, dadurch gekennzeichnet, daß die Breite des Bandes in der Ausziehzone (41) mindestens um den Faktor 1,05 vergrößert wird.

6. Verfahren nach Anspruch 4, dadurch gekennzeichnet, daß die Breite des Bandes in der Ausziehzone (41) mindestens um den Faktor 1,1 vergrößert wird.

7. Verfahren nach Ansprüchen 5 oder 6, dadurch gekennzeichnet, daß das Band nach dem Verlassen der Druckzone (25) keiner wesentlichen Längsausdehnung unterzogen wird.

8. Verfahren nach Ansprüchen 1 bis 7, dadurch gekennzeichnet, daß das Glas in die Druckkammer (25) mit einer Temperatur von mindestens 1.260°C eintritt.

9. Verfahren nach Ansprüchen 1 bis 7, dadurch gekennzeichnet, daß das Glas in die Druckkammer (25) mit einer Temperatur von mindestens 1.150°C eintritt.

10. Verfahren nach Ansprüchen 1 bis 9, dadurch gekennzeichnet, daß die Ausdehnung des Glases im wesentlichen vollständig ist, ehe die Glastemperatur unter 1.040°C abfällt.

11. Verfahren nach Ansprüchen 1 bis 10, dadurch gekennzeichnet, daß der in die Druckkammer (25) geführte Strom geschmolzenen Glases vor dem Eintritt in die Druckkammer von geschmolzenem Metall getragen wird.

12. Verfahren nach Anspruch 11, dadurch gekennzeichnet, daß der Strom geschmolzenen Glases durch eine Öffnung in die Druckkammer (25) gefördert wird, die durch ein horizontales, langgestrecktes, feuerfestes Teil (20) an der Oberseite und das Bad aus geschmolzenem Metall (22) auf der Unterseite gebildet wird.

13. Vorrichtung zum Herstellen von Flachglas unterhalb der Gleichgewichtsdicke mit einer Formkammer (13), die so ausgebildet ist, daß sie ein Bad aus geschmolzenem Metall (16) aufnimmt, wobei die Formkammer (13) eine Druckkammer (25) und Einrichtungen (37) zum Erzeugen eines Druckes in der Kammer (25) aufweist, und einer Kühlkammer (41), die von den anderen durch eine sich über der Höhe des geschmolzenen Metalls senkrecht erstreckende Abschlußwand (35) getrennt ist, eine Eingangsöffnung zwischen einer Quelle (10) geschmolzenen Glases und der Druckkammer (25), so daß geschmolzenes Glas (11) in die Druckkammer (25) gelangen kann, und einer Austrittsöffnung (52) in der Kühlkammer (41), durch die das Glasband vom Bad aus geschmolzenem Metall (16) abgezogen werden kann, dadurch gekennzeichnet, daß mindestens ein Teil der Kühlkammer (41) eine Breite aufweist, die größer ist als die maximale Breite der Druckkammer (25), die Eintrittsöffnung eine Breite hat, die im wesentlichen so groß ist wie die Breite der Druckkammer (25), und der Druck in der Druckkammer (25) höher ist als in der Kühlkammer (41), in der Kühlkammer (41) Einrichtungen (40) zum Eingriff mit Kantenteilen des aus der Druckkammer (25) austretenden Glasbandes vohanden sind, die das Glasband am Querschrumpfen hindern.

## Revendications

1. Procédé de fabrication de verreflotté d'épaisseur inférieure à la valeur d'équilibre, dans lequel un courant de verre en fusion est répandu sur un bain de métal fondu (16) et une pression supérieure à la pression atmosphérique est imposée au verre dans une chambre à surpression (25) de manière à réduire l'épaisseur du verre à une valeur inférieure à l'épaisseur d'équilibre tandis qu'il flotte sur le métal fondu et qu'il est refroidi jusqu'à être dans un état dimensionnellement stable au moment où il est extrait de la chambre à surpression, caractérisé en ce que le verre est empêché de se rétrécir latéralement jusqu'à ce qu'il ait pris par refroidissement l'état dimensionnellement stable, et en ce que le verre est amené à prendre contact avec les parois latérales (26) de la chambre à surpression pendant tout le temps où la pression supérieure à la pression atmosphérique est imposée au verre.

2. Procédé selon la revendication 1, caractérisé en ce que le verre en fusion est répandu sur le métal fondu (16) sur une largeur qui est pratiquement la même que la largeur du verre au moment où il est extrait de la chambre à surpression (25).

3. Procédé selon la revendication 1 ou 2, caractérisé en ce que le verre en fusion est répandu sur le métal fondu à une température d'au moins 1150°C.

4. Procédé selon l'une quelconque des revendications 1 à 3, caractérisé en ce que des forces sont appliquées aux parties bordantes du verre dans une zone d'amincissement (41), après son extraction de la zone à surpression (25), de manière à élargir le ruban de verre.

5. Procédé selon la revendication 4, caractérisé en ce que la largeur du ruban est multipliée par un facteur 1,05 au moins dans la zone d'amincissement (41).

6. Procédé selon la revendication 4, caractérisé en ce que la largeur du ruban est multipliée par un facteur 1,1 au moins dans la zone d'amincissement (41).

7. Procédé selon la revendication 5 ou 6, caractérisé en ce qu'il n'est pratiquement pas imposé d'amincissement par étirage longitudinal au ruban après qu'il a quitté la zone de pression (25).

8. Procédé selon l'une quelconque des revendications 1 à 7, caractérisé en ce que le verre en fusion entre dans la chambre de pression (25) à une température d'au moins 1260°C.

9. Procédé selon l'une quelconque des revendications 1 à 7, caractérisé en ce que le verre en fusion entre dans la chambre de pression (25) à une température d'au moins 1150°C.

10. Procédé selon l'une quelconque des revendications 1 à 9, caractérisé en ce que l'amincissement du verre est pratiquement achevé avant que la température du verre ne tombe au-dessous de 1040°C.

11. Procédé selon l'une quelconque des revendications 1 à 10, caractérisé en ce que le courant de verre en fusion qui passe dans la chambre de pression (25) est supporté par le métal fondu (22) avant qu'il n'entre dans la chambre de pression.

12. Procédé selon la revendication 11, caractérisé en ce que le courant de verre en fusion est répandu dans la chambre de pression (25) à travers une ouverture définie par un organe de matière réfractaire (20) allongé horizontalement du côté inférieur et par un bain de métal fondu (22) du côté inférieur.

13. Dispositif pour la fabrication de verre flotté d'épaisseur inférieure à la valeur d'équilibre, comprenant une chambre de formage (13) conçue pour contenir un bain de métal fondu (16), la chambre de formage (13) comprenant une chambre de pression (25) et des moyens (37) pour imposer une pression dans cette chambre, ainsi qu'une chambre de refroidissement (41) séparée de la chambre de pression par une cloison de fermeture étanche (35) s'étendant verticalement au-dessus du niveau du métal fondu, une ouverture d'entrée entre une source de verre en fusion (10) et la chambre de pression (25), agencée de façon à livrer passage au verre en fusion (11) dans la chambre de pression, et une ouverture de sortie (52) dans la chambre de refroidissement, à travers laquelle le ruban de verre peut être extrait du bain de métal fondu, caractérisé en ce qu'une partie au moins de la chambre de refroidissement (41) a une largeur plus grande que la largeur maximale de la chambre de pression (25), en ce que l'ouverture d'entrée a une largeur pratiquement aussi grande que la largeur de la chambre de pression (25) et en ce que la pression dans la chambre de pression (25) et plus élevée que dans la chambre de refroidissement (41), des moyens (40) étant prévus dans la chambre de refroidissement (41) pour saisir des parties bordantes du ruban de verre qui sort de la chambre de pression (25) et pour empêcher le rétrécissement latéral du ruban de verre.

FIG. 1

FIG. 2

FIG. 3